# EUROPEAN PATENT APPLICATION

(11) **EP 2 570 915 A2**
(43) Date of publication of application: **20.03.2013**
(21) Application number: 12183812.2
(22) Date of filing: 11.09.2012
(51) Int. Cl.: G06F 3/12

(54) **Data processing apparatus, data file, and method for controlling the data processing apparatus**

(30) Priority: 15.09.2011 JP 2011201455
(71) Applicant: Kyocera Document Solutions Inc., Chuo-ku Osaka-shi Osaka 540-8585 (JP)
(72) Inventor: Hayamizu, Hitoshi, Osaka, 540-8585 (JP)
(74) Representative: Beetz & Partner

(57) **Abstract**

Provided is a data processing apparatus which can improve user's convenience. The data processing apparatus includes a storage portion (113) which stores set value information in which a set value for processing a data file and a set value symbol are associated with each other, and a processing portion (110) which verifies a set value symbol included in a file name of a data file to be processed by an instruction with the set value information, sets a current set value to a set value corresponding to the set value symbol, and performs processing of the data file to be processed by the instruction based on the set value after setting.

## Description

### BACKGROUND OF THE DISCLOSURE

### 1. Field of the Disclosure

The present disclosure relates to a data processing apparatus, a data file, and a method for controlling the data processing apparatus.

### 2. Description of Related Art

A user who performs print output with an image forming apparatus transfers image data to the image forming apparatus and make the image forming apparatus perform a printing process. For instance, the user inserts an external memory such as a USB memory into the image forming apparatus so as to make the image forming apparatus to perform the printing process of image data stored in the external memory. Otherwise, the user makes the image forming apparatus perform the printing process of image data transferred from a personal computer.

In this case, the user changes a current set value (for example, a default set value or a set value set by other user before) so that the printing process is performed with a desired set value. Therefore, the image forming apparatus is usually equipped with an operation panel for accepting an instruction for setting a set value from the user.

Thus, the user can set a set value by performing input operation to the operation panel. Note that the setting of a set value can also be performed by a personal computer.

Here, as to the printing process, there are many set items having set values that can be set, such as paper sheet size, single-sided or double-sided, monochrome or color, reduction or enlargement, density, and multiple pages in one sheet. Therefore, when making the image forming apparatus perform the printing process, the user extracts a necessary set item from a plurality of set items, and then checks the current set value of the extracted set item. Further, when the current set value is not a desired set value, the user changes the set value. The user must perform the series of operations. Therefore, it is not convenient for the user that many input operations to the operation panel or the personal computer are required for performing the printing process.

### SUMMARY OF THE DISCLOSURE

The present disclosure is made to solve the above-mentioned problem, and it is an object thereof to improve user's convenience (to reduce operations to be performed by the user).

A data processing apparatus of the present disclosure includes a storage portion which stores set value information in advance, in which a set value related to processing of data file and a set value symbol are associated with each other, and stores a current set value; and a processing portion which verifies a set value symbol included in a file name of a data file to be processed by the instruction with the set value information, sets the current set value related to processing of the data file to a set value corresponding to the set value symbol included in the file name of the data file to be processed by the instruction, and performs processing of the data file to be processed by the instruction based on the set value after setting.

According to the present disclosure, it is possible to improve user's convenience (to reduce operations to be performed by the user).

Further features and advantages of the present disclosure will become apparent from the description of embodiments given below.

### BRIEF DESCRIPTION OF THE DRAWINGS

Fig. 1 is a general structural diagram of an image forming apparatus according to an embodiment of the present disclosure.
Fig. 2 is a plan view of an operation panel of the image forming apparatus.
Fig. 3 is a schematic diagram illustrating an image forming portion of the image forming apparatus.
Fig. 4 is a block diagram illustrating a hardware structure of the image forming apparatus.
Fig. 5 is a diagram for explaining an outline of set value information stored in a storage portion of the image forming apparatus.
Fig. 6 is a diagram illustrating an example of a screen displayed on the operation panel of the image forming apparatus (a screen when the file name is displayed).
Fig. 7 is a diagram illustrating an example of a screen displayed on the operation panel of the image forming apparatus (a screen when a set value after setting is displayed).
Fig. 8 is a diagram illustrating an example of a screen displayed on the operation panel of the image forming apparatus (a screen when the set value after setting is displayed).
Fig. 9 is a diagram illustrating an example of a screen displayed on the operation panel of the image forming apparatus (a screen when accepting an additional setting instruction of the set value after setting).
Fig. 10 is a flowchart for explaining an action when the image forming apparatus performs the printing process of image data.

### DETAILED DESCRIPTION OF THE PREFERRED EMBODIMENTS

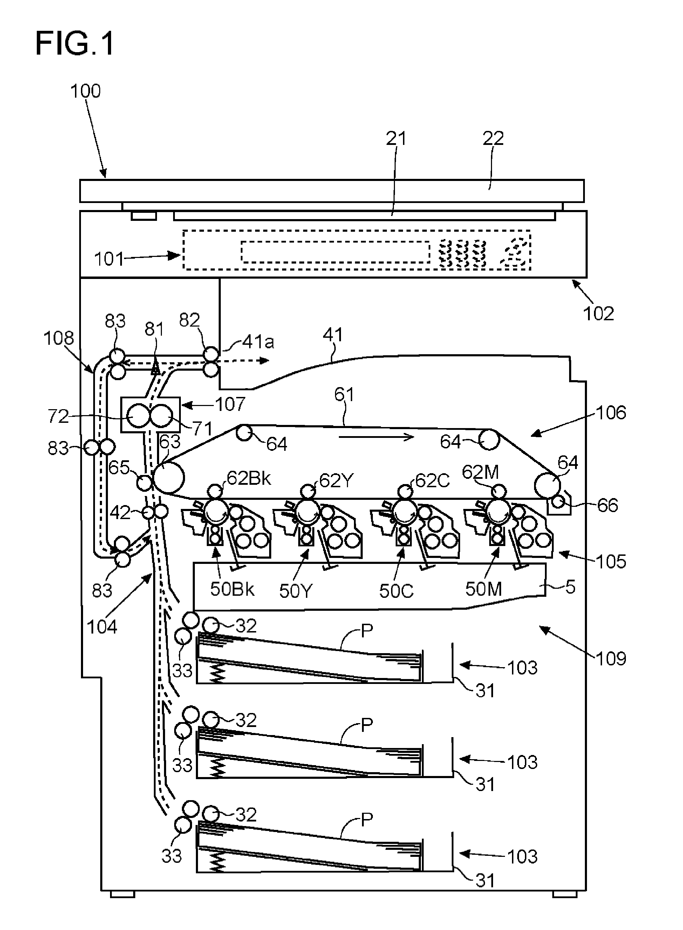

First, with reference to Figs. 1 to 3, a general structure of an image forming apparatus according to an embodiment of data processing apparatus of the present disclosure is described.

An image forming apparatus 100 of this embodiment is a color multifunction peripheral as illustrated in Fig. 1, for example, and can perform a plurality of jobs such as copying and printing. In addition, the image forming apparatus 100 includes an operation panel 101, an image reading portion 102, a paper sheet feeder 103, a transport path 104, an image forming portion 105, an intermediate transfer portion 106, a fixing portion 107, and a double-sided transport path 108. Note that a mechanical portion including the paper sheet feeder 103, the transport path 104, the image forming portion 105, the intermediate transfer portion 106, the fixing portion 107, and the double-sided transport path 108 is a printing portion 109 which prints an image corresponding to image data on a paper sheet P and outputs the same.

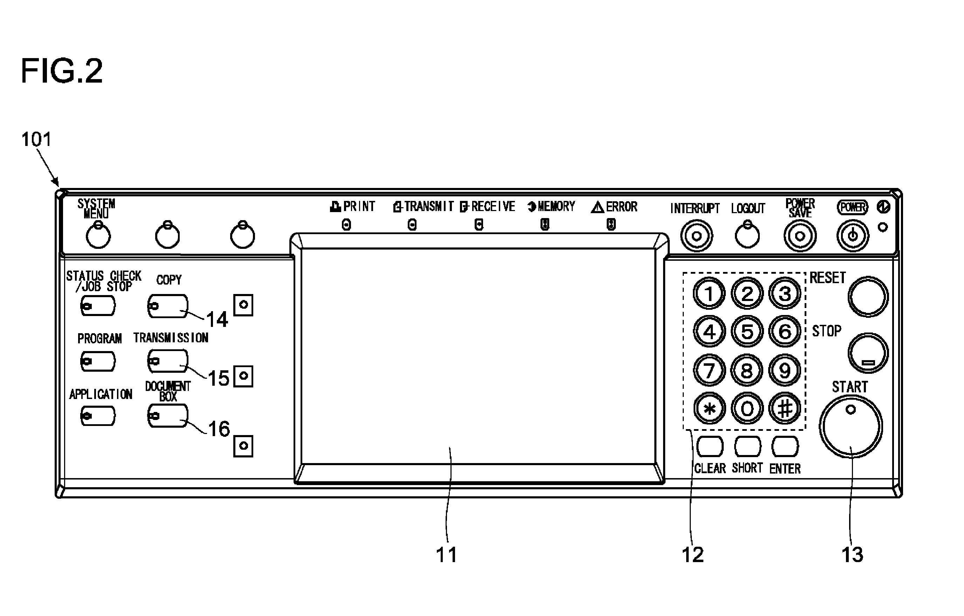

The operation panel 101 corresponds to an operation display portion. This operation panel 101 is equipped with a liquid crystal display portion 11 as illustrated in Fig. 2. The user can perform various setting and the like by pressing setting keys displayed on the liquid crystal display portion 11. Note that the liquid crystal display portion 11 has a display surface covered with a touch panel.

In addition, the operation panel 101 1 is equipped with hardware keys such as a ten key 12, and a start key 13.

Further, the operation panel 101 is also equipped with hardware keys such as a copy key 14, a transmission key 15, and a box key 16. Further, when the user presses the copy key 14, setting keys and the like necessary for inputting set values of a copy job are displayed on the liquid crystal display portion 11. When the user presses the transmission key 15, setting keys and the like necessary for inputting set values of a scanner job and a facsimile job are displayed on the liquid crystal display portion 11. When the user presses the box key 16, setting keys and the like necessary for using a box (for example, a storage region disposed in a storage portion 113 described later) are displayed on the liquid crystal display portion 11.

With reference to Fig. 1 again, the image reading portion 102 reads a document so as to generate image data of the document. The image reading portion 102 illuminates a document placed on a contact glass 21 and receives reflection light with an image sensor, performs A/D conversion of an output value of the image sensor, and performs various corrections on data after the A/D conversion, so as to generate the image data. Thus, it is possible to perform printing based on the image data obtained by the document read action by the image reading portion 102. In addition, the image data obtained by the document read action by the image reading portion 102 can also be accumulated. Note that when the image reading portion 102 reads the document, it is possible to press the document placed on the contact glass 21 with a document cover 22.

The paper sheet feeder 103 includes a plurality of cassettes 31 housing the paper sheets P, and feeds the paper sheets P housed in the plurality of cassettes 31 to the transport path 104. In addition, this paper sheet feeder 103 includes a pickup roller 32 which picks up the paper sheet P and a separation roller pair 33 for preventing double feeding of the paper sheets P.

The paper sheet P fed by the paper sheet feeder 103 is guided by the transport path 104 to a delivery tray 41 after passing through the fixing portion 107. This transport path 104 is equipped with a registration roller pair 42 which keeps the paper sheet P to wait before a drive roller 63 and sends out the same to the intermediate transfer portion 106 in synchronization with timing.

The image forming portion 105 forms a toner image based on the image data and includes four colors of image forming portions 50 (an image forming portion 50Bk forming a black toner image, an image forming portion 50Y forming a yellow toner image, an image forming portion 50C forming a cyan toner image, and an image forming portion 50M forming a magenta toner image), and an exposing device 5. Note that the image forming portions 50Bk, 50Y, 50C, and 50M form different colors of toner images but have basically the same structure. Therefore, in the following description, the symbols indicating colors (Bk, Y, C, and M) are omitted.

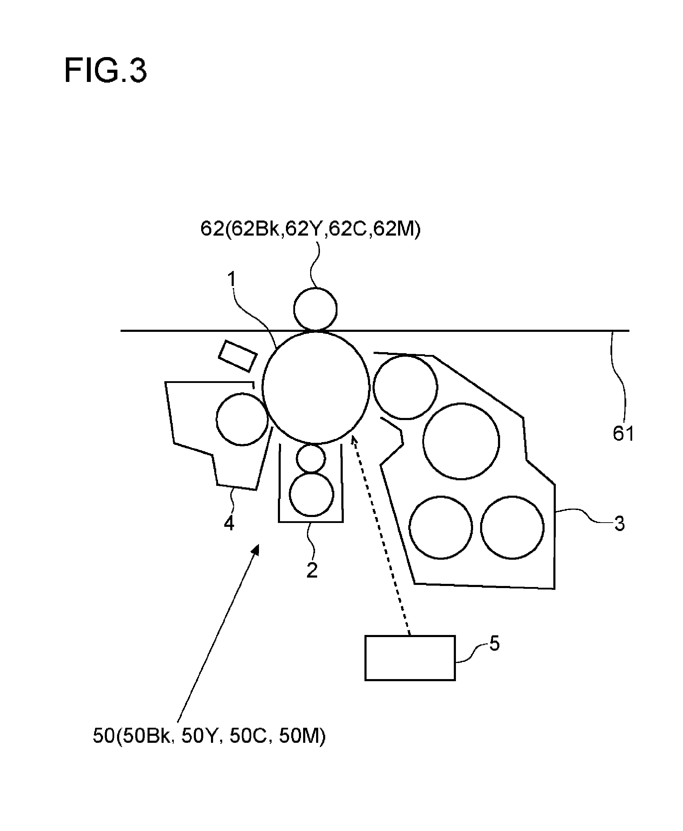

Each of the image forming portions 50 includes a photosensitive drum 1, a charging device 2, a developing device 3, and a cleaning device 4 as illustrated in Fig. 3.

The exposing device 5 performs exposure scanning of outer circumference surfaces of the photosensitive drums 1 so as to form electrostatic latent images on the photosensitive drums 1.

With reference to Fig. 1 again, the intermediate transfer portion 106 undergoes primary transfer of the toner image from the image forming portion 105, and performs secondary transfer onto the paper sheet P. The intermediate transfer portion 106 includes at least an intermediate transfer belt 61, primary transfer rollers 62Bk, 62Y, 62C, and 62M assigned respectively to the image forming portions 50. The primary transfer rollers 62Bk, 62Y, 62C, and 62M, together with corresponding image forming portions 50 (specifically, the photosensitive drums 1), sandwich the intermediate transfer belt 61, and a transfer voltage (transfer bias) is applied to the primary transfer rollers 62Bk, 62Y, 62C, and 62M.

In addition, the intermediate transfer portion 106 also includes the drive roller 63 and a follower roller 64. Further, the intermediate transfer belt 61 is stretched around the drive roller 63 and the follower roller 64, as well as the primary transfer rollers 62Bk, 62Y, 62C, and 62M. Therefore, when the drive roller 63 is driven to rotate, the intermediate transfer belt 61 moves in a circulating manner.

Further, a secondary transfer roller 65, together with the drive roller 63, sandwiches the intermediate transfer belt 61, and a transfer voltage (transfer bias) is applied to the secondary transfer roller 65.

Then, the toner images formed by the image forming portions 50 are sequentially superimposed and primarily transferred onto the intermediate transfer belt 61 without misregistration by the primary transfer rollers 62Bk, 62Y, 62C, and 62M to which the transfer voltage is applied. In other words, a full color toner image is transferred onto the intermediate transfer belt 61. After that, the toner image primarily transferred onto the intermediate transfer belt 61 is secondarily transferred onto the paper sheet P by the secondary transfer roller 65 to which the transfer voltage is applied.

In addition, the intermediate transfer portion 106 also includes a belt cleaning device 66. Then, the belt cleaning device 66 cleans the intermediate transfer belt 61 after the toner image is secondarily transferred from the intermediate transfer belt 61 to the paper sheet P.

The fixing portion 107 heats and presses the toner image secondarily transferred onto the paper sheet P so as to fix the same. This fixing portion 107 includes a fixing roller 71 in which a heating source is embedded, and a pressing roller 72 that is pressed to the fixing roller 71. Then, the paper sheet P onto which the toner image is secondarily transferred passes through between the fixing roller 71 and the pressing roller 72 so as to be heated and pressed. Thus, the toner image is fixed onto the paper sheet P.

Further, the paper sheet P passes through the fixing portion 107 and is delivered to the delivery tray 41. Thus, the printing process is completed.

In addition, the double-sided transport path 108 branches from the transport path 104 on a downstream side of the fixing roller 71 and the pressing roller 72, and joins the transport path 104 on an upstream side of the registration roller pair 42. Further, in the double-sided transport path 108, there are disposed a switching nail 81 at the branch point from transport path 104, a delivery roller pair 82 whose rotation direction can be switched at a delivery port 41a connecting the delivery tray 41, a transport roller pair 83 which transports the paper sheet P, and the like.

When the double-sided printing is performed, the switching nail 81 becomes a position for closing the double-sided transport path 108, so as to guide the paper sheet P sent from the fixing portion 107 to the delivery tray 41. In addition, the delivery roller pair 82 first rotates in the forward direction so that the paper sheet P is partially delivered onto the delivery tray 41. After that, the delivery roller pair 82 rotates in the backward direction before the paper sheet P completely passes through the delivery roller pair 82. In this case, the switching nail 81 swings in the direction for opening the double-sided transport path 108. Thus, the one-side printed paper sheet P is guided to the double-sided transport path 108.

The paper sheet P guided to the double-sided transport path 108 is transported by the transport roller pair 83 and reaches the upstream side of the registration roller pair 42. Then, the paper sheet P is sent from the intermediate transfer portion 106 to the fixing portion 107 again. In this case, because the front and back sides of the paper sheet P are reversed, the secondary transferring process and the fixing process are performed on the back side (unprinted side) of the paper sheet P. Then, the paper sheet P after finishing the double-sided printing is delivered to the delivery tray 41.

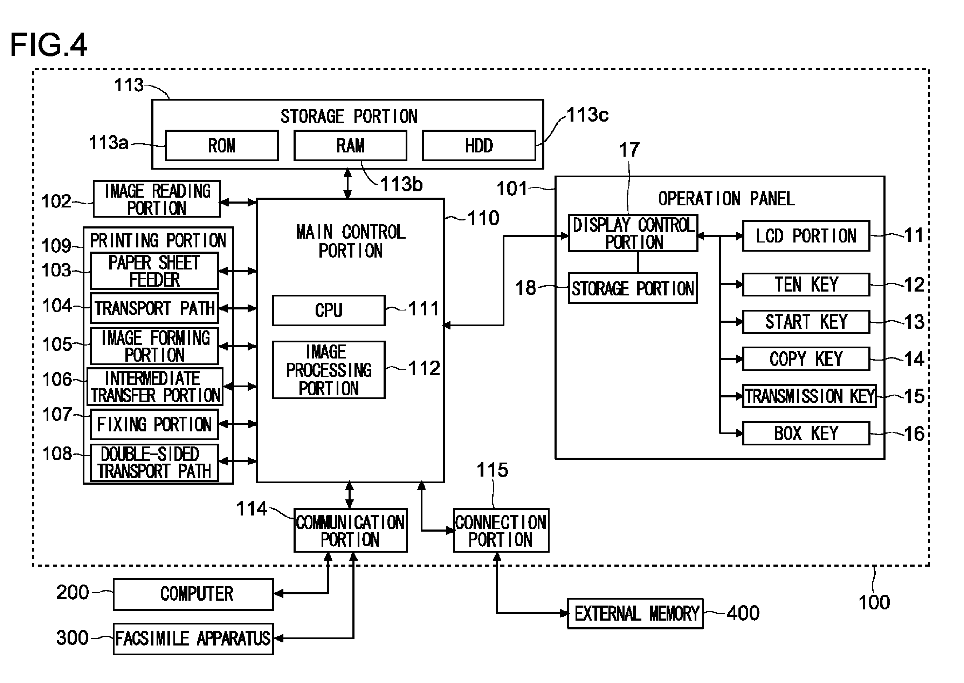

Next, with respect to FIG. 4, a hardware structure of the image forming apparatus 100 is described.

The image forming apparatus 100 includes a main control portion 110. This main control portion 110 includes a CPU 111, an image processing portion 112, and the like. In addition, the main control portion 110 is connected to the operation panel 101, the image reading portion 102, the printing portion 109 (the paper sheet feeder 103, the transport path 104, the image forming portion 105, the intermediate transfer portion 106, the fixing portion 107, and the double-sided transport path 108), and the like. Then, the main control portion 110 performs control of the individual portions and calculations based on various programs and data stored in the storage portion 113. Note that the main control portion 110 may be split into a main control portion which performs general control and image processing, and an engine control portion which performs image formation and ON/OFF control of motors which rotate various rotating members.

The storage portion 113 includes a volatile storage device and a nonvolatile storage device, such as a ROM 113a, a RAM 113b, and an HDD 113c. Further, the various programs and data are stored in the ROM 113a and are extended to the RAM 113b, for example.

Note that the main control portion 110 corresponds to a "processing portion", and the main control portion 110 and the storage portion 113 constitute the data processing apparatus.

The operation panel 101 connected to the main control portion 110 includes a display control portion 17. The display control portion 17 is constituted of a CPU and ICs, and controls display action of the liquid crystal display portion 11. Specifically, the display control portion 17 reads information stored in a storage portion 18 (or the storage portion 113) based on an input operation performed by the user to the operation panel 101, and controls the liquid crystal display portion 11 to display an appropriate screen. For instance, when the user presses a job selection key such as the copy key 14, the display control portion 17 controls to display a screen (on which various setting keys and messages are displayed) for accepting an input of a set value of the selected job from the user, in accordance with the user's pressing operation of the job selection key. Note that screen information of this screen to be displayed on the liquid crystal display portion 11 is stored in the storage portion 18 (or the storage portion 113), for example.

Further, when a setting key displayed on the liquid crystal display portion 11 (touch panel) is pressed by the user, the display control portion 17 specifies the coordinates of the pressed position in accordance with an output of the touch panel. Thus, the user's pressed position on the liquid crystal display portion 11 (the setting key pressed by the user) is specified. For instance, data such as a table indicating a relationship between the output of the touch panel and the coordinates of the pressed position is stored in the storage portion 18 (or the storage portion 113).

When the user presses a setting key displayed on the liquid crystal display portion 11 is pressed, the display control portion 17 specifies the setting key pressed by the user and outputs the result to the main control portion 110. Then, the main control portion 110 sets the set value in accordance with the setting key pressed by the user. After that, the display control portion 17 controls the liquid crystal display portion 11 to display the start key as a software key. Thus, the user can perform the job with a desired set value by pressing the start key displayed on the liquid crystal display portion 11. The job is performed also when the user pressed the start key 13 as a hardware key.

In addition, the main control portion 110 is connected to a communication portion 114. The communication portion 114 is connected to an external personal computer 200, for example, via a network (or a cable) so as to communicate with the same. Therefore, the printing process can be performed based on image data transmitted from the personal computer 200. In addition, the image data obtained by the document read action by the image reading portion 102 can be transmitted to the personal computer 200. Note that the communication portion 114 may incorporate a modem, and in this case, it is possible to perform facsimile communication with an external facsimile apparatus 300 via a network such as a telephone network.

Further, the main control portion 110 is connected to a connection portion 115 to which an external memory 400 (for example, a USB memory or the like) can be attached. Therefore, the printing process can be performed based on image data stored in the external memory 400. In addition, the image data obtained by the document read action by the image reading portion 102 can be stored in the external memory 400.

Here, for example, it is supposed that the user attaches the external memory 400 storing image data to the connection portion 115. In other words, the user intends to perform the printing process of image data stored in the external memory 400 by the image forming apparatus 100.

In this case, when the main control portion 110 recognizes that the external memory 400 is attached to the connection portion 115, the main control portion 110 controls the operation panel 101 to display a file name assigned to the image data. Note that when there are a plurality of image data stored in the external memory 400, the operation panel 101 displays a plurality of file names assigned to the plurality of image data. In this case, the screen displayed on the operation panel 101 is a selection screen for the user to select image data to be printed. For instance, when the user selects desired image data, the user presses the file name assigned to the image data.

Then, in accordance with the user's pressing operation, the operation panel 101 displays setting keys for the user to input set values for the printing process. The setting keys are assigned with set item names such as "paper sheet size", "single-sided or double-sided printing" and "image quality", for example. Here, only three set items are mentioned as examples, but there are many other set items for which set values can be set.

Note that using the setting key "paper sheet size", a paper sheet size (A4 size, B5 size, letter size, or the like) can be set. In addition, using the setting key "single-sided or double-sided printing", single-sided printing or double-sided printing can be set. In addition, using the setting key "image quafity", monochrome printing or color printing can be set.

Here, in a usual state, just after the power on, current set values of the set items are default set values. Otherwise, when another user has used the apparatus, values set by the another user are valid. Therefore, it is annoying for the user to have to check the current set values of the set items and to set the set values as necessary.

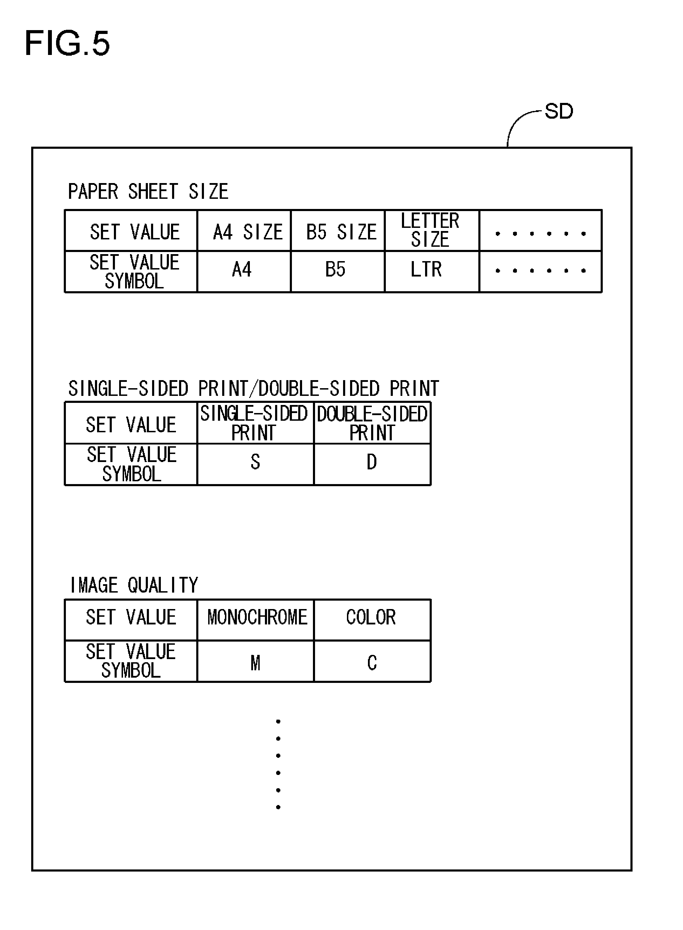

Therefore, in this embodiment, the storage portion 113 stores set value information SD (see Fig. 5) in advance, in which the set values for printing process and set value symbols are associated with each other. Further, when the main control portion 110 accepts user's instruction to start the printing process, the main control portion 110 verifies the set value symbol included in the file name of the image data to be processed by the instruction with the set value information SD, sets the current set value for the printing process to the set value corresponding to the set value symbol included in the file name of the image data to be processed by the instruction, and controls the printing portion 109 to perform the printing process based on the set value after setting.

As the set value information SD in which the set value for the printing process and the set value symbol are associated with each other, there is a table as illustrated in Fig. 5. Hereinafter, the "paper sheet size", the "single-sided or double-sided printing" and the "image quality" are exemplified and described.

As illustrated in Fig. 5, as to the set item of the paper sheet size, the set values that can be set include A4 size, B5 size, and letter size. Therefore, the A4 size is associated with a set value symbol "A4", the B5 size is associated with a set value symbol "B5", and the letter size is associated with a set value symbol "LTR". Thus, when the file name includes the set value symbol "A4", for example, the main control portion 110 sets the current set value to A4 size.

In addition, as to the set item of the single-sided or double-sided printing, the set values that can be set include single-sided printing and double-sided printing. Therefore, the single-sided printing is associated with a set value symbol "S", and the double-sided printing is associated with a set value symbol "D". Thus, when the file name includes the set value symbol "S", for example, the main control portion 110 sets the current set value to the single-sided printing.

In addition, as to the set item of the image quality, the set values that can be set include monochrome and color. Therefore, the monochrome is associated with a set value symbol "M", and the color is associated with a set value symbol "C". Thus, when the file name includes the set value symbol "M", for example, the main control portion 110 sets the current set value to the monochrome.

In addition, although not shown, also for other set item, a certain set value symbol should be associated with a set value.

For instance, when assigning a set value symbol for setting a set value to a file name, in order to distinguish from an identification name of image data that the user can arbitrarily determine, the identification name of the image data and the set value symbol are separated by "$". For instance, in order to perform the monochrome printing on both sides of an A4 paper sheet, the file name should be "$A4$D$M$○○○.△△△". In this file name, "ooo" is the identification name of the image data, and "△△△" is an extension.

In addition, in this embodiment, the operation panel 101 displays a set value set by the main control portion 110, and accepts from the user whether or not to allow the printing process based on the set value after setting. Then, when the operation panel 101 accepts the printing process based on the set value after setting, the main control portion 110 controls the printing portion 109 to perform the printing process of image data to be processed by the instruction based on the set value after setting.

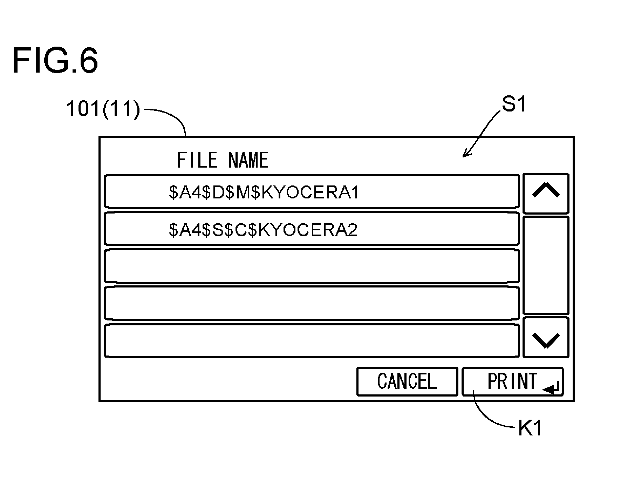

Specifically, as illustrated in Fig. 6, the operation panel 101 first displays the selection screen S1 for the user to select image data to be printed (displays file names assigned to the image data).

For instance, when the external memory 400 stores image data and the user attaches the external memory 400 to the connection portion 115 so that the external memory 400 is recognized by the main control portion 110, the operation panel 101 displays the selection screen S1. Next, when the user presses (selects) the file name on the selection screen S1, the main control portion 110 decides that an instruction to start the printing process job of the image data stored in the external memory 400 (for example, a job called direct print or the like) is accepted from the user.

Note that the image data may be transmitted from the personal computer 200 or may be stored in a storage region called a box in the storage portion 113.

Here, two file names are displayed on the selection screen S1 illustrated in Fig. 6. One of the file names is "$A4$D$M$KYOCERA1", and the other file name is "$A4$S$C$KYOCERA2". In other words, "$A4$D$M$KYOCERA1" includes the set value symbol to perform the monochrome printing on both sides of an A4 paper sheet, and "$A4$S$C$KYOCERA2" includes the set value symbol to perform the color printing on one side of an A4 paper sheet.

Therefore, when the user selects "$A4$D$M$KYOCERA1" in the selection screen S1, the main control portion 110 sets the setting of the paper sheet size to "A4 size", sets the setting of the single-sided or double-sided printing to "double-sided printing", and sets the setting of the image quality to "monochrome". On the other hand, when the user selects "$A4$S$C$KYOCERA2" in the selection screen S1, the main control portion 110 sets the setting of the paper sheet size to "A4 size", sets the setting of the single-sided or double-sided printing to "single-sided printing", and sets the setting of the image quality to "color".

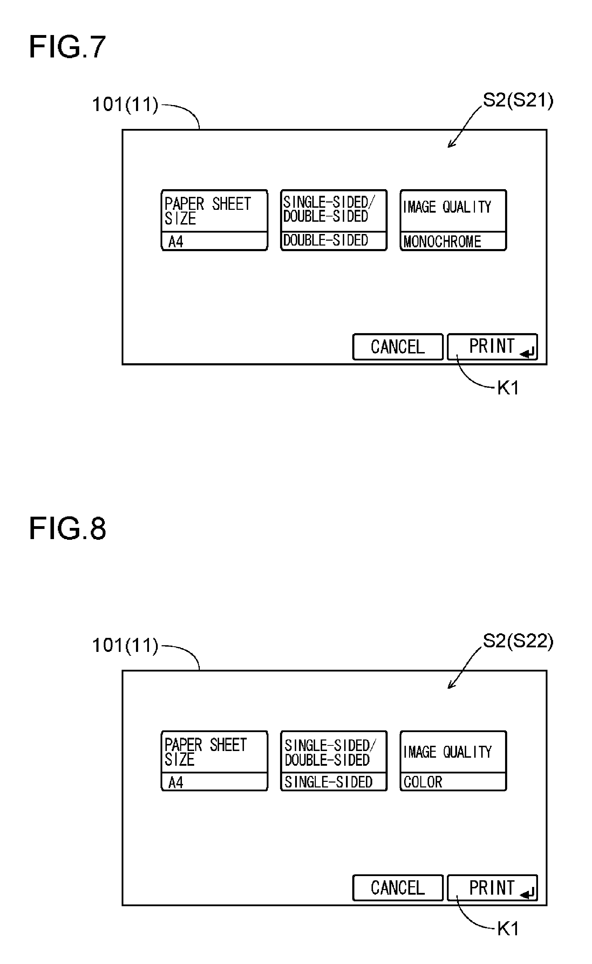

In addition, when the main control portion 110 sets the set value, the operation panel 101 displays a set value screen S2 (see Figs. 7 and 8) for the user to confirm the set value after setting (the set value corresponding to the set value symbol included in the file name of the image data to be processed by the instruction). For instance, when the user selects "$A4$D$M$KYOCERA1" in the selection screen S1, the operation panel 101 displays a set value screen S21 as illustrated in Fig. 7. When the user selects "$A4$S$C$KYOCERA2" in the selection screen S1, the operation panel 101 displays a set value screen S22 as illustrated in Fig. 8.

In addition, this set value screen S2 is configured to accept from user whether or not to allow the printing process based on the set value after setting (the set value corresponding to the set value symbol included in the file name of the image data to be processed by the instruction). In other words, when the user presses a "PRINT" key K1 on the set value screen S2, the main control portion 110 controls the printing portion 109 to perform the printing process based on the set value after setting. Note that when the user presses the "PRINT" key K1 on the selection screen S1, the main control portion 110 controls the printing portion 109 to perform the printing process based on the set value after setting without controlling the operation panel 101 to display the set value screen S2.

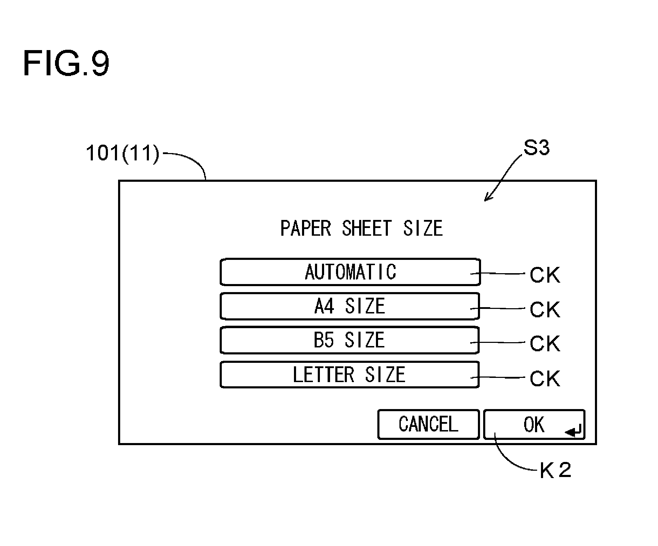

Further, the set value screen S2 is configured to accept from the user an additional setting instruction of the set value after setting (the set value corresponding to the set value symbol included in the file name to be processed by the instruction). For instance, when the user presses the "paper sheet size" on the set value screen S2, the operation panel 101 displays a set value setting screen S3 for accepting from the user an additional setting instruction of the set value of the paper sheet size as illustrated in Fig. 9.

This set value setting screen S3 is provided with a setting key CK assigned with a set value that can be set. For instance, when the setting key CK of "B5 size" is pressed by the user, the main control portion 110 sets the setting of the paper sheet size to the B5 size. When the setting key CK of "letter size" is pressed by the user, the main control portion 110 sets the setting of the paper sheet size to the letter size.

Further, when an "OK" key K2 on the set value setting screen S3 is pressed by the user, the operation panel 101 resets the display screen to the set value screen S2. In this case, the operation panel 101 changes the set value to be displayed based on the setting of the set value performed by the user in the set value setting screen S3. For instance, it is supposed that the user sets the setting of the paper sheet size to the B5 size in the set value setting screen S3. In this case, although not shown, the operation panel 101 sets the set value display of the paper sheet size from "A4" to "B5". After that, when the user presses the "PRINT" key K1 on the set value screen S2, the main control portion 110 controls the printing portion 109 to perform the printing process based on the set value that is set again by the user's additional setting instruction.

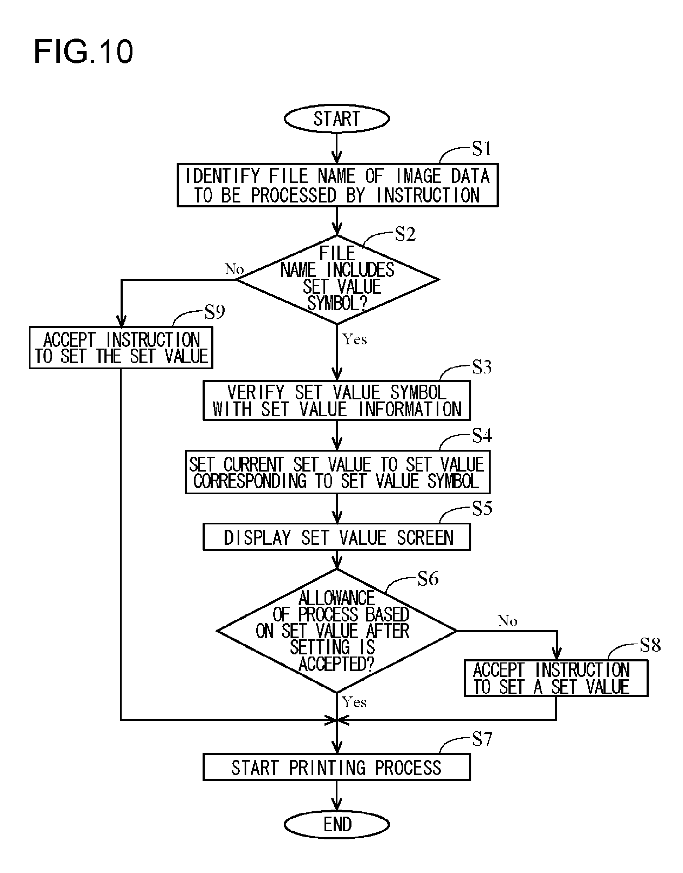

Next, with reference to Fig. 10, the printing action of the image forming apparatus 100 is described.

First, at the start of the flow of Fig. 10, it is supposed for example that the user attaches the external memory 400 to the connection portion 115, and the external memory 400 is recognized by the main control portion 110. Therefore, at this time point, the operation panel 101 displays the selection screen S1 (see Fig. 6) for the user to select image data to be printed. In addition, it is supposed that the set value information SD (see Fig. 5) in which the set value for the printing process and the set value symbol are associated with each other is stored in the storage portion 113 in advance. Further, when the user presses (selects) the file name on the selection screen S1, namely, the user instructs to perform the printing process job of image data stored in the external memory 400, the flow of Fig. 10 starts.

In Step S1, the main control portion 110 identifies the file name of the image data to be processed by the instruction. Next, in Step S2, the main control portion 110 decides whether or not the file name of the image data to be processed by the instruction includes the set value symbol. Then, when the file name of the image data to be processed by the instruction includes the set value symbol, the process goes to Step S3. When the file name of the image data to be processed by the instruction does not include the set value symbol, the process goes to Step S9.

In Step S3, the main control portion 110 verifies the set value symbol included in the file name of the image data to be processed by the instruction with the set value information SD (see Fig. 5). In addition, in Step S4, the main control portion 110 sets the current set value for the printing process to the set value corresponding to the set value symbol included in the file name of the image data to be processed by the instruction.

After that, in Step S5, the operation panel 101 displays the set value set by the main control portion 110 (the set value corresponding to the set value symbol included in the file name of the image data to be processed by the instruction) and accepts from the user whether or not to allow the process based on the set value after setting. In other words, the operation panel 101 displays the set value screen S2 (see Figs. 7 and 8).

In Step S6, the main control portion 110 decides whether or not the allowance of the process based on the set value after setting (the set value corresponding to the set value symbol included in the file name of the image data to be processed by the instruction) has been accepted (whether or not the user has pressed the "OK" key K1 in the set value screen S2). Then, when the allowance of the process based on the set value after setting has been accepted, the process goes to Step S7, in which the main control portion 110 controls the printing portion 109 to perform the printing process based on the set value stored in the storage portion 113 (the set value corresponding to the set value symbol included in the file name of the image data to be processed by the instruction).

On the other hand, in Step S6, when the allowance of the process based on the set value after setting (the set value corresponding to the set value symbol included in the file name of the image data to be processed by the instruction) has not been accepted, the process goes to Step S8. In Step S8, the operation panel 101 displays the set value setting screen S3 in accordance with the user's input operation on the set value screen S2, and accepts a user's additional setting instruction of the set value. In other words, the main control portion 110 sets the set value after setting again based on the user's additional setting instruction. After that, the process goes to Step S7, and the main control portion 110 controls the printing portion 109 to perform the printing process based on the set value stored in the storage portion 113 (the set value set again by the user's additional setting instruction).

Note that when the process goes from Step S2 to Step S9, the operation panel 101 displays a set value screen for accepting the user's instruction to set the set value, and accepts the user's instruction to set the set value. Note that the set value screen displayed by the operation panel 101 is the same as the set value screen S2 in Step S5. However, unlike the set value screen S2 in Step S5, the set value screen in Step S9 displays the old set value (for example, the default set value).

After this, the process goes to Step S7, and the main control portion 110 controls the printing portion 109 to perform the printing process based on the set value stored in the storage portion 113. In other words, when the set value is set by the user, the main control portion 110 controls the printing portion 109 to perform the printing process based on the set value set by the user's instruction to set. On the other hand, when the set value is not set by the user, the main control portion 110 controls the printing portion 109 to perform the printing process based on the old set value (for example, the default set value).

Note that Steps S5 and S6 may be omitted in the flow of Fig. 10. In this case, in Step S4, the main control portion 110 sets the current set value for the printing process to the set value corresponding to the set value symbol included in the file name of the image data to be processed by the instruction. Then, the process goes to Step S7, and the main control portion 110 controls the printing portion 109 to perform the printing process based on the set value corresponding to the set value symbol included in the file name of the image data to be processed by the instruction without controlling the operation panel 101 to display the set value screen S2, namely without accepting whether or not to allow the process based on the set value after setting (without setting the set value after setting again).

In this embodiment, as described above, the storage portion 113 stores the set value information SD in which the set value for processing image data (data file) and the set value symbol are associated with each other, and stores the current set value. In addition, the main control portion 110 (processing portion) verifies the set value symbol included in the file name of the image data to be processed by the instruction with the set value information SD, sets the current set value for the printing process to the set value corresponding to the set value symbol included in the file name of the image data to be processed by the instruction, and controls the printing portion 109 to perform the printing process based on the set value after setting. In other words, the image data printed by the image forming apparatus 100 (main control portion 110) of this embodiment has the file name including the set value symbol associated with the set value for the printing process. When the printing process is performed, the current set value for the printing process is set to the set value corresponding to the set value symbol included in the file name, and the image forming apparatus 100 (printing portion 109) performs the printing process based on the set value after setting. Therefore, when the set value symbol is included in the file name of the image data to be processed by the instruction, the main control portion 110 automatically sets the current set value for the printing process to the set value corresponding to the set value symbol, even if the user has not performed the input operation for setting the set value. Therefore, it is convenient for the user that the printing process is performed by the desired set value only by including in the file name the set value symbol associated with the desired set value (without performing the operation for setting the set value). In other words, in this embodiment, it is possible to improve user's convenience (to reduce operations to be performed by the user).

In addition, in this embodiment, as described above, the operation panel 101 (operation display portion) displays the set value after setting (the set value corresponding to the set value symbol included in the file name of the image data to be processed by the instruction). Thus, it is convenient for the user that the set content can be easily confirmed.

In addition, in this embodiment, as described above, the operation panel 101 accepts whether or not to allow the printing process based on the set value after setting (the set value corresponding to the set value symbol included in the file name of the image data to be processed by the instruction). When the operation panel 101 accepts the allowance of the printing process based on the set value after setting, the main control portion 110 controls the printing portion 109 to perform the printing process based on the set value after setting. In other words, in this structure, after the current set value is set to the set value corresponding to the set value symbol, it is not forced to perform the printing process based on the set value after setting. Therefore, it is convenient for the user that the printing process based on the set value after setting can be stopped when there is a flaw or the like in the set value after setting.

Further, in this embodiment, the operation panel 101 accepts the additional setting instruction of the set value after setting (the set value corresponding to the set value symbol included in the file name of the image data to be processed by the instruction). When the operation panel 101 accepts the additional setting instruction of the set value after setting, the main control portion 110 sets the set value after setting again in accordance with the additional setting instruction accepted by the operation panel 101. Thus, it is convenient for the user who wants additional setting of the set value after setting.

The embodiment described above is merely an example in all respects and should not be interpreted as a limitation. The scope of the present disclosure is defined not by the above description of the embodiment but by the claims, and further includes all modifications within the meaning and the scope equivalent to the claims.

For instance, the above embodiment describes the case where the present disclosure is applied to the image forming apparatus as an example of the data processing apparatus, but the present disclosure can be applied to an electronic apparatus other than the image forming apparatus. As examples, the present disclosure can be applied to a music playing device such as a mobile music player and a display device (a liquid crystal display of a digital camera, a personal computer, a mobile phone, or the like) other than the image forming apparatus.

When the present disclosure is applied to a music playing device, it is possible, for example, to include a set value symbol associated with a sound level or sound quality in the file name. In addition, when the present disclosure is applied to a display device, it is possible, for example, to include a set value symbol associated with a display size in the file name.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A data processing apparatus comprising:
a storage portion (113) which stores set value information in advance, in which a set value related to processing of a data file and a set value symbol are associated with each other, and stores a current set value; and
a processing portion (110) which verifies a set value symbol included in a file name of a data file to be processed by an instruction with the set value information, sets the current set value related to processing of the data file to a set value corresponding to the set value symbol included in the file name of the data file to be processed by the instruction, and performs processing of the data file to be processed by the instruction based on the set value after setting.

2. The data processing apparatus according to claim 1, further comprising an operation display portion (101) which displays the set value after setting.

3. The data processing apparatus according to claim 2, wherein
the operation display portion (101) accepts whether or not to allow the process based on the set value after setting, and
when the operation display portion (101) accepts allowance of the process based on the set value after setting, the processing portion (110) performs the processing of the data file to be processed by the instruction based on the set value after setting.

4. The data processing apparatus according to claim 2 or 3, wherein
the operation display portion (101) accepts an additional setting instruction of the set value after setting, and
when the operation display portion (101) accepts the additional setting instruction of the set value after setting, the processing portion (110) sets the set value after setting again in accordance with the additional setting instruction accepted by the operation display portion (101).

5. The data processing apparatus according to any one of claims 1 to 4, further comprising a printing portion (109), wherein
the processing portion (110) controls the printing portion (109) to perform printing process of the data file to be processed by the instruction based on the set value after setting.

6. The data processing apparatus according to any one of claims 1 to 5, further comprising a connection portion (115) to be connected to an external memory (400), wherein
when the processing portion (110) receives an instruction to process a data file stored in the external memory (400) as the external memory (400) is connected to the connection portion (115), the processing portion (110) performs processing of the data file stored in the external memory (400) by a set value corresponding to a set value symbol included in a file name of the data file stored in the external memory (400).

7. A data file to be processed by a data processing apparatus, having a file name including a set value symbol associated with a set value for processing performed by the data processing apparatus, wherein
when the data processing apparatus performs the processing, a current set value for the processing performed by the data processing apparatus is set to the set value corresponding to the set value symbol included in the file name so that the processing is performed based on the set value after setting.

8. A method for controlling a data processing apparatus including a storage portion (113) which stores a current set value and a processing portion (110) which performs processing of a data file to be processed by an instruction, the method comprising the steps of:
storing in advance set value information in which a set value for processing a data file and a set value symbol associated with each other;
verifying a set value symbol included in a file name of the data file to be processed by the instruction with the set value information;
setting the current set value for processing the data file to a set value corresponding to the set value symbol included in the file name of the data file to be processed by the instruction; and
performing the processing of the data file to be processed by the instruction based on the set value after setting.

9. The method for controlling a data processing apparatus according to claim 8, further comprising the step of displaying the set value after setting.

10. The method for controlling a data processing apparatus according to claim 9, further comprising the step of accepting whether or not to allow the process based on the set value after setting after the step of displaying the set value after setting, wherein
when the allowance of the process based on the set value after setting is accepted, the processing of the data file to be processed by the instruction is performed based on the set value after setting.

11. The method for controlling a data processing apparatus according to claim 9 or 10, further comprising the step of accepting an additional setting instruction of the set value after setting after the step of displaying the set value after setting, wherein
when the additional setting instruction of the set value after setting is accepted, the set value after setting is set again in accordance with the additional setting instruction.

12. The method for controlling a data processing apparatus according to any one of claims 8 to 11, wherein
the step of performing the processing of the data file to be processed by the instruction based on the set value after setting includes the step of controlling a printing portion (109) of the data processing apparatus to perform the printing process of the data file to be processed by the instruction based on the set value after setting.

13. The method for controlling a data processing apparatus according to any one of claims 8 to 12, wherein
the step of performing the processing of the data file to be processed by the instruction based on the set value after setting includes the step of performing processing of a data file stored in an external memory (400) by a set value corresponding to a set value symbol included in a file name of the data file stored in the external memory (400).
